# EUROPEAN PATENT SPECIFICATION

(11) **EP 2 648 437 B1**
(45) Date of publication and mention of the grant of the patent: **28.06.2017**
(21) Application number: 11851711.9
(22) Date of filing: 22.12.2011
(51) Int. Cl.: H04L 29/06, H04W 12/04, H04W 88/12, H04W 88/08

(54) **METHOD, APPARATUS AND SYSTEM FOR KEY GENERATION**
SCHLÜSSELERZEUGUNGSVERFAHREN, -VORRICHTUNG UND -SYSTEM
PROCÉDÉ, APPAREIL ET SYSTÈME DE GÉNÉRATION DE CLÉ

(30) Priority: 22.12.2010 CN 201010616563
(43) Date of publication of application: 09.10.2013
(73) Proprietor: Huawei Technologies Co., Ltd., Longgang District Shenzhen, Guangdong 518129 (CN)
(72) Inventor: ZHANG, Lijia, Shenzhen Guangdong 518129 (CN); ZHANG, Dongmei, Shenzhen Guangdong 518129 (CN); CHEN, Jing, Shenzhen Guangdong 518129 (CN)
(74) Representative: Körber, Martin Hans
(86) International application number: PCT/CN2011/084481
(87) International publication number: WO 2012/083873

(56) References cited:
- EP-A1- 2 139 260
- CN-A- 101 406 024
- CN-A- 101 742 500
- CN-A- 101 772 019
- US-A1- 2010 284 304
- "3rd Generation Partnership Project; Technical Specification Group Services and System Aspects; Rationale and track of security decisions in Long Term Evolved (LTE) RAN / 3GPP System Architecture Evolution (SAE) (Release 9)", 3GPP STANDARD; 3GPP TR 33.821, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.0.0, 1 June 2009 (2009-06-01), pages 1-148, XP050376896,

## Description

### TECHNICAL FIELD

The present invention relates to the field of communications technologies, and in particular, to a method, an apparatus, and a system for generating a key that use a radio network controller as an anchor point.

### BACKGROUND

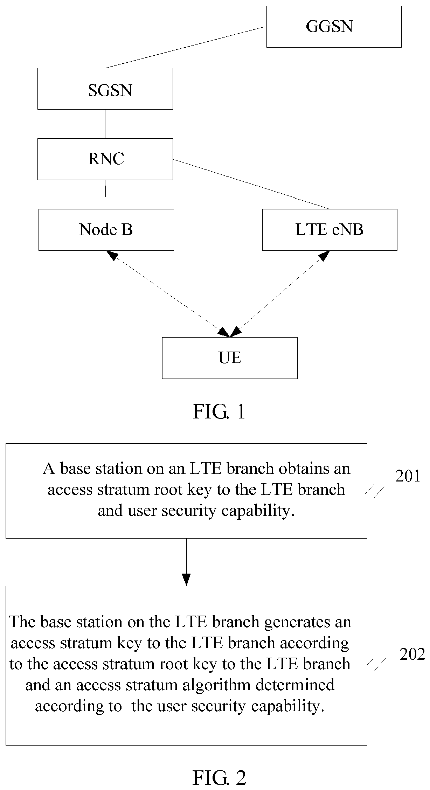

Currently, to provide a high-rate service for users, LTE (Long Term Evolution, long term evolution) -UMTS (Universal Mobile Telecommunications System, universal mobile telecommunications system) resource may be converged. As shown in FIG. 1, in this architecture, an access network of the UMTS and an access network of the LTE system exist, but only a UMTS branch core network exists. The application scenario in this architecture is called a U&L Boosting scenario that uses an RNC (Radio Network Controller, radio network controller) as an anchor point. An access network node eNB (evolved Node B, evolved NodeB) of the LTE accesses the core network of the UMTS network through the RNC anchor point. A UE may send data to the core network of the UMTS through the access networks of the UMTS and LTE systems at the same time, thereby improving a service rate.

If the LTE-UMTS convergence technology is used in a Single QoS scenario, that is, data of an LTE branch (a branch connecting the UE and the LTE) and data of the UMTS branch (a branch connecting the UE and the UMTS) are converged to a PDCP (Packet Data Convergence Protocol, packet data convergence protocol) stratum, so that the data of the LTE branch and the data of the UMTS branch are converged after the data is processed by their corresponding PDCP stratum. Therefore, in this solution, the RNC and the eNB completely reserve their existing protocol strata, and the LTE branch and the UMTS branch may perform security protection on data according to their own security protocol strata.

During an application in a Single PDCP scenario, that is, the data of the LTE branch and the data of the UMTS branch are converged under the PDCP stratum, the LTE branch does not have the PDCP stratum, and the PDCP stratum of the UMTS branch uniformly processes the converged data. Because security protection on the data of the LTE branch is performed at the PDCP stratum of the eNB and the eNB in this solution does not have the PDCP stratum, the data of the LTE branch and the data of the UMTS branch are converged at the PDCP stratum of the RNC.

During an application in a Single RLC scenario, that is, the data of the LTE branch and the data of the UMTS branch are converged at the RLC (radio link control, radio link control protocol) stratum, if the UMTS branch uses a TM (Transparent Mode, transparent) mode, that is, the data of the UMTS branch is encrypted at the MAC (Media Access Control, media access control) stratum, in this solution, the eNB on the LTE branch does not have the PDCP stratum, the data of the UMTS branch and the data of the LTE branch are converged at the RLC stratum of the RNC, and the RLC stratum of the UMTS branch needs to add a function of performing security protection on the data of the LTE branch; and if the UMTS branch uses an AM (Acknowledged Mode, acknowledged) or UM (Unacknowledged Mode, unacknowledged) mode, the data of the UMTS branch is encrypted at the RLC stratum.

The prior art has at least the following disadvantages: in a U&L Boosting network architecture, UEs authenticate each other through the core network of the UMTS branch and generate a system key to the UMTS branch. Since, in the U&L Boosting network architecture, only an access network of the LTE branch is available and the core network of the LTE branch is unavailable, the UE may not generate a system key to the LTE branch through authentication with the core network of the LTE branch. The LTE branch does not have the key to perform security protection on data of the UE on the LTE branch, and therefore security of the LTE branch needs to be improved.

EP 2 482 487 A1 discloses a method for deriving an air interface key, and further discloses that a core network node sends an intermediate key KASMEU to an enhanced Radio Network Controller (RNC+) through a key distribution message, so that the RNC+ may calculate a key according to the intermediate key and the existing parameter of the universal mobile telecommunication system network. Thereby, the core network node derives the intermediate key KASMEU according to a generated parameter, and the generated parameter comprises a traditional ciphering key CK and a traditional integrity key IK.

EP 2 139 260 A1 discloses a method for negotiating security between a UE and an LTE system when the UE hands over from a UTRAN to an LTE system, and further discloses that the source SGSN sends the handover request including the key information currently used by the source system (or the key derived by the source system according to the currently used key information) to the target MME. According to the received key information, the target MME derives an Access Security Management Entity (ASME) key Kasme, and then sends the parameters used in Kasme derivation to the target eNB.

3GPP TR 33.821, V9.0,0 (1 June, 2009, XP0503766896) discloses that during inter-RAT handover, 3G/2G to LTE, an authentication vector may be transferred from 2G/3G to MME. After MME received security, e.g. CK, IK, it should be able to derive SAE_keys=KDF.

### SUMMARY

An embodiment of the present invention provides a method, an apparatus, and a system for generating a key, which can increase security of data communication of an LTE branch in a U&L Boosting scenario.

An aspect of the present invention provides a method for generating a key to an LTE branch that is applicable to an LTE-UMTS resource convergence scenario, including:
obtaining, by a base station on an LTE branch, an access stratum root key to the LTE branch and UE security capability;
generating, according to the access stratum root key and an access stratum algorithm determined according to the UE security capability, an access stratum key to the LTE branch; and
generating, by the base station, when a packet data convergence protocol stratum counter value of the LTE branch overflows, according to the access stratum root key to the LTE branch, a physical cell identity, and a downlink frequency number that are currently in use, a new access stratum root key to the LTE branch, so that the base station, according to the new access stratum root key to the LTE branch and the access stratum algorithm, generates a new access stratum key to the LTE branch.

An aspect of the present invention provides a base station that is applicable to an LTE-UMTS resource convergence scenario, including:
an information obtaining module, configured to obtain an access stratum root key to an LTE branch and UE security capability;
a key generation module, configured to generate, according to the access stratum root key obtained by the information obtaining module and an access stratum algorithm determined according to the UE security capability, an access stratum key to the LTE branch; and
a key updating module (34), configured to generate, when a packet data convergence protocol stratum counter value of the LTE branch overflows, according to the access stratum root key to the LTE branch, a physical cell identity, and a downlink frequency number that are currently in use, a new access stratum root key to the LTE branch, so that the key generation module generates, according to the new access stratum root key to the LTE branch and the access stratum algorithm, a new access stratum key to the LTE branch.

It can be seen from the technical solutions according to the embodiments of the present invention that, the present invention provides a method for generating a key to an LTE branch that is applicable to an LTE-UMTS resource convergence scenario. A base station on the LTE branch obtains an access stratum root key to the LTE branch and user security capability through a UMTS branch; and can generate an access stratum key according to the access stratum root key to the LTE branch and an access stratum algorithm determined according to the user security capability. By using the technical solutions provided in the present invention, security protection can be performed on data of a UE on the LTE branch according to a generated access stratum key to the LTE branch when the UE communicates in the LTE-UMTS resource convergence scenario through the LTE branch, which avoids interception on the data of the UE by an attacker due to unavailability of a key to the LTE branch, and improves UE communication security while ensuring normal communication of the UE through the LTE branch.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic diagram of a U&L Boosting network architecture that uses an RNC as an anchor point in the prior art;
FIG. 2 is a flowchart of a method for generating a key to an LTE branch according to an embodiment of the present invention;
FIG. 3 is a schematic structural diagram of a base station on an LTE branch according to an embodiment of the present invention;
FIG. 4 is a flowchart of a method for generating a key to an LTE branch according to an embodiment of the present invention;
FIG. 5 is a schematic structural diagram of an RNC on a UMTS branch according to an embodiment of the present invention;
FIG. 6 is a schematic structural diagram of a system for generating a key to an LTE branch according to an embodiment of the present invention;
FIG. 7 is a diagram of an application scenario according to specific Embodiment 1 of the present invention;
FIG. 8 is a diagram of an application scenario according to specific Embodiment 2 of the present invention;
FIG. 9 is a diagram of an application scenario according to specific Embodiment 3 of the present invention;
FIG. 10 is a diagram of an application scenario according to specific Embodiment 4 of the present invention; and
FIG. 11 is a diagram of an application scenario according to specific Embodiment 5 of the present invention.

### DESCRIPTION OF EMBODIMENTS

The technical solution of the present invention will be clearly and completely described in the following with reference to the accompanying drawings in the embodiments of the present invention. Apparently, the described embodiments are merely a part rather than all of the embodiments of the present invention. All other embodiments obtained by persons of ordinary skill in the art according to the embodiments of the present invention without creative efforts shall fall within the protection scope of the present invention.

Embodiments of the present invention provide a method, an apparatus, and a system for generating a key that are applicable to an LTE-UMTS resource convergence scenario and other corresponding evolution scenarios. For example, an HSPA is an evolution version from a UMTS network, and the method, the apparatus, and the system for generating a key provided in the embodiments of the present invention are also applicable to an LTE-HSPA resource convergence scenario. Abase station on an LTE branch obtains an access stratum root key to the LTE branch and user security capability and can generate an access stratum key to the LTE branch according to the access stratum root key and an access stratum algorithm determined according to the user security capability. Implementation of the technical solutions provided in the present invention can avoid interception on data of a UE by an attacker due to unavailability of a key to the LTE branch, and improve communication security while ensuring normal communication of the UE through the LTE branch.

The method, the apparatus, and the system for generating a key provided in the embodiments of the present invention are applicable to three application scenarios under a U&L Boosting network architecture that uses an RNC as an anchor point, which are Single QoS, Single PDCP, and Single RLC.

It should be noted that, the derivation and update mechanism of a key to a UMTS branch involved in the implementation of the technical solutions in the present invention is the same as the current mechanism. Therefore, the prior art is not described in detail in the embodiments of the present invention.

To further understand the technical solutions in the embodiments of the present invention, the following describes in detail.

As shown in FIG. 2, an embodiment of the present invention provides a method for generating a key to an LTE branch that is applicable to an LTE-UMTS resource convergence scenario, from an aspect of a base station on the LTE branch, and the technical solution includes:
Step 201: A base station on an LTE branch obtains an access stratum root key to the LTE branch and user security capability.
Step 202: The base station on the LTE branch generates an access stratum key to the LTE branch according to the access stratum root key to the LTE branch and an access stratum algorithm determined according to the user security capability.

The access stratum key to the LTE branch required in this embodiment is used to provide security protection on RRC (Radio Resource Control, radio resource control) signaling and user plane data, including, an integrity key to the RRC signaling, a cipher key to the RRC signaling, and a cipher key to the user plane data.

A process of obtaining an access stratum root key to the LTE branch in step 201 may include: obtaining the access stratum root key to the LTE branch from a UMTS branch. The access stratum root key to the LTE branch is generated by the RNC according to a system key to the UMTS branch and a key generation parameter.

According to the foregoing solution, specifically, the foregoing solution may be implemented in any of the following four manners:
Manner 1: When the key generation parameter is a UMTS branch counter value (COUNT value of the UMTS branch), the access stratum root key to the LTE branch (KeNB) is generated by the RNC according to the system key to the UMTS branch (CK, IK) and the COUNT value of the UMTS branch;
   as for a specific generation method, the KeNB may be generated by calculation using a KDF function: the CK and IK and the COUNT value of the UMTS branch are used as entered parameters of the function. The function relationship is expressed as KeNB = KDF (CK, IK, a UMTS branch counter value); and
   the UMTS branch counter value may be but is not limited to a maximum RLC (Radio Link Control, radio link control) COUNT value, or a maximum RRC (Radio Resource Control, radio resource control) COUNT value, or a maximum MAC (Media Access Control, media access control) COUNT value of a UE on each radio bearer of the UMTS branch.
Manner 2: When the key generation parameter is a non-access stratum counter value of the UMTS branch (NAS COUNT of the UMTS branch), the KeNB is forwarded by the RNC and generated by a server (VLR/SGSN) according to the system key to the UMTS branch (CK, IK) and the non-access stratum counter value of the UMTS branch; as for a specific generation method, the KeNB may be generated by calculating a KDF function: the CK and IK and the NAS COUNT value of the UMTS branch are used as entered parameters. The function relationship is expressed as KeNB = KDF (CK, IK, NAS COUNT value of the UMTS branch);
   or, manner 2 is that the KeNB is forwarded by the RNC and generated by the server according to the NAS COUNT value of the UMTS branch and a root key to the LTE branch (Kasme) generated by the server according to the system key to the UMTS branch (CK, IK). As for a specific Kasme generation method, the Kasme may be generated by calculating a KDF function: the CK and IK and a PLMN ID (Public Land Mobile Network Identity, public land mobile network identity) are used as entered parameters. The function relationship is expressed as Kasme = KDF (CK, IK, PLMN ID). In addition, for a specific KeNB generation method, the KeNB is generated also by calculating a KDF function: the Kasme and the non-access stratum counter value of the UMTS branch are used as entered parameters. The function relationship is expressed as KeNB = KDF (Kasme, non-access stratum counter value of the UMTS branch).
Manner 3: When the key generation parameter is a random numerical value (Nonce value) generated by the RNC, the KeNB is generated by the RNC according to the system key to the UMTS branch (CK, IK) and the Nonce value. As for a specific generation method, the KeNB is generated by calculating a KDF function: the CK and IK and the random numerical value (Nonce value) are used as entered parameters. The function relationship is expressed as KeNB = KDF (CK, IK, Nonce).
Manner 4: When the key generation parameter is a user-side random number (NONCE_{UE}) constructed according to a value of highest 20 bits of the UMTS branch counter value (a UMTS branch Start value) and a network-side random number (NONCE_{MME}) constructed according to a fresh value (Fresh value) generated by the RNC, the RNC constructs a NONCE_{UE} according to the Start value of the UMTS branch, uses the Fresh value as a NONCE_{MME}, and generates a KeNB according to the system key to the UMTS branch (CK, IK). As for a specific generation method, the KeNB may be generated by calculating a KDF function: the CK and IK, the user-side random number (NONCE_{UE}), and the network-side random number (NONCE_{MME}) are used as entered parameters. The function relationship is expressed as KeNB = KDF (CK, IK, NONCE_{UE}, NONCE_{MME}).

In the foregoing manner 4, constructing a NONCE_{UE} according to the Start value of the UMTS branch may be implemented by using but is not limited to any of the following three manners:
(1) The RNC complements 12 zero-bits to the Start value of the UMTS branch to generate a NONCE_{UE}.
(2) The RNC and the UE maintain a 12-bit state change counter (Count-State). When the UE changes from Active to Idle state, the value of this counter is increased by 1. A 20-bit Start value and the 12-bit Count-State value are connected in parallel to form a NONCE_{UE}.
(3) The RNC generates a 12-bit random number, and connects the 20-bit Start value and the 12-bit random numerical value in parallel to form a NONCE_{UE}.

It should be noted that, the process of obtaining an access stratum root key to the LTE branch in step 201 may also be implemented by using the following technical solution:
obtaining, by the base station on the LTE branch, the key generation parameter from the RNC on the UMTS, where the key generation parameter is a random numerical value (Nonce value) generated by the RNC; and
generating an access stratum root key to the LTE branch according to the random numerical value and a root key to an IP stratum security tunnel (K_{IPsec}) generated during an authentication with the RNC.

According to the foregoing technical solution, specifically, a specific KeNB generation method may be: the KeNB is generated by calculating a KDF function: the K_{IPsec} and Nonce value are used as entered parameters. The function is expressed as KeNB = KDF (K_{IPsec,} Nonce).

For the method shown in the embodiment provided in FIG. 2, the method may also include:
after the access stratum key to the LTE branch is generated, sending an access stratum security mode command under protection of the access stratum key to the LTE branch to a user end, so that the user end generates the access stratum key to the LTE branch. The access stratum security mode command at least includes the user security capability and the determined access stratum algorithm.

It should be noted that, the access stratum algorithm includes an integrity algorithm and a cipher algorithm determined by the base station on the LTE branch according to the UE security capability.

According to the method provided in the embodiment shown in FIG. 2, the method may also include a processing step for updating an access stratum root key to the LTE branch:
when the packet data convergence protocol (PDCP) stratum counter value (Count value) of the LTE branch overflows, the base station on the LTE branch generates a new access stratum root key to the LTE branch (KeNB*) according to the access stratum root key to the LTE branch (KeNB), a physical cell identity (Physical cell ID), and a downlink frequency number (EARFCN-DL) that the base station on the LTE branch uses in the current. As for a specific KeNB* generation method, the KeNB* is also generated by calculating a KDF function: the KeNB, Physical cell ID, and EARFCN-DL are used as entered parameters. The function is expressed as KeNB* = KDF (KeNB, Physical cell ID, EARFCN-DL).

It should be noted that, after the base station on the LTE branch generates a new access stratum key to the LTE branch, the base station may generate, according to the new access stratum key to the LTE branch and the access stratum algorithm determined in step 202, a new access stratum key to the LTE branch. By using the key update processing step, a same key is ensured not be repeatedly used on a same bearer, which improves security.

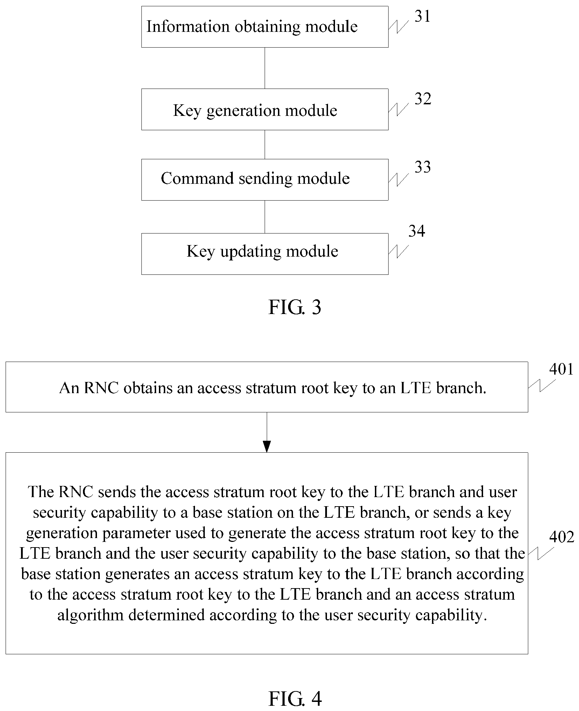

As shown in FIG. 3, based on the method embodiment provided in FIG. 2, an embodiment of the present invention provides a base station on the LTE branch that may be applicable to an LTE-UMTS resource convergence scenario, which may include the following function modules:
an information obtaining module 31, configured to obtain an access stratum root key to an LTE branch and user security capability; and
a key generation module 32, configured to generate an access stratum key to the LTE branch according to the access stratum root key to the LTE branch obtained by the information obtaining module 31 and an access stratum algorithm determined according to the user security capability.

Optionally, the information obtaining module 31 may be specifically configured to:
obtain the access stratum root key to the LTE branch from an RNC on the UMTS branch; where,
the access stratum root key to the LTE branch is generated by the RNC according to a system key to the UMTS branch and a key generation parameter. The key generation parameter is: a UMTS branch counter value, or a random numerical value generated by the RNC, or a user-side random number constructed according to a value of highest 20 bits of the UMTS branch counter value and a network-side random number constructed according to a fresh value generated by the RNC (It should be noted that, the method for generating an access stratum root key to the LTE branch by the RNC according to the system key to the UMTS branch and the key generation parameter may be implemented in the same way as that used in the method recorded in the embodiment provided in FIG. 2);
   or,
the access stratum root key to the LTE branch is obtained by the RNC from a server, where, the access stratum root key to the LTE branch is generated by the server according to the system key to the UMTS branch and a non-access stratum counter value of the UMTS branch, or generated by the server, after generating a root key to the LTE branch according to the system key to the UMTS branch, according to the root key to the LTE branch and the non-access stratum counter value of the UMTS branch. (It should be noted that, the method for obtaining an access stratum root key to the LTE branch by the RNC from the server may be implemented in the same way as that used in the method recorded in the embodiment provided in FIG. 2.)

Optionally, the information obtaining module 31 may be specifically configured to:
obtain a key generation parameter from a RNC on the UMTS branch, where the key generation parameter is a random numerical value generated by the RNC; and
generate an access stratum root key to the LTE branch according to the random numerical value and a root key to an IP stratum security tunnel generated during an authentication with the RNC.

Optionally, the base station may further include:
a command sending module 33, configured to: after the key generation module 32 generates the access stratum key to the LTE branch, send an access stratum security mode command under protection of the access stratum key to a user end, so that the user end generates the access stratum key to the LTE branch. The access stratum security mode command at least includes the user security capability and the access stratum algorithm determined by the base station on the LTE branch according to the UE security capability.

Optionally, the base station may further include:
a key updating module 34, configured to generate a new access stratum root key to the LTE branch according to the access stratum root key to the LTE branch, a physical cell identity, and a downlink frequency number that are currently in use when a PDCP stratum counter value of the LTE branch overflows, so that the key generation module 32 generates a new access stratum key to the LTE branch according to the new access stratum root key to the LTE branch and the access stratum algorithm.

It should be noted that, the embodiment of the present invention is an apparatus embodiment obtained based on the method shown in FIG. 2, and includes a same or similar technical feature as that of the method embodiment provided in FIG. 2. Therefore, the common technical feature is not described in detail in this embodiment, and reference may be made to the relevant description provided in the method embodiment shown in FIG. 2.

As shown in FIG. 4, an embodiment of the present invention provides a method for generating a key to an LTE branch that is applicable to an LTE-UMTS resource convergence scenario, from an aspect of an RNC, and the technical solution includes:
Step 401: A RNC on a UMTS branch obtains an access stratum root key to the LTE branch.
Step 402: The RNC on the UMTS branch sends the access stratum root key to the LTE branch and user security capability to a base station on the LTE branch, or sends the user security capability and a key generation parameter used to generate the access stratum root key to the LTE branch to the base station, so that the base station generates an access stratum key to the LTE branch according to the access stratum root key to the LTE branch and an access stratum algorithm determined according to the user security capability.

Specifically, the obtaining an access stratum root key to the LTE branch in step 401 may be implemented by using the following technical solution: generating, by the RNC, according to a system key to the UMTS branch and a key generation parameter, an access stratum root key to the LTE branch (KeNB), where the key generation parameter is: a UMTS branch counter value, or a random numerical value generated by the RNC, or a user-side random number constructed according to a value of highest 20 bits of the UMTS branch counter value and a network-side random number constructed according to a fresh value generated by the RNC.

The solutions may be specifically implemented in any of the following three manners:
Manner 1: When the key generation parameter is the UMTS branch counter value (the UMTS branch COUNT value), the RNC generates the KeNB according to the system key to the UMTS branch (CK, IK) and the COUNT value of the UMTS branch. It should be noted that, the KeNB generation method in this embodiment is the same as that provided in the embodiment shown in FIG. 2 when the key generation parameter is the UMTS branch counter value. The function is expressed as KeNB = KDF (CK, IK, the UMTS branch counter value); where,
   the UMTS branch counter value may be but is not limited to a maximum RLC (Radio Link Control, radio link control) COUNT value, or a maximum RRC (Radio Resource Control, radio resource control) COUNT value, or a maximum MAC (Media Access Control, media access control) COUNT value of a UE on each radio bearer of the UMTS branch.
Manner 2: When the key generation parameter is the random numerical value (Nonce value) generated by the RNC, the RNC generates the KeNB according to the system key to the UMTS branch (CK, IK) and the random numerical value. The function relationship is expressed as KeNB = KDF (CK, IK, Nonce).
Manner 3: When the key generation parameter is the user-side random number (NONCE_{UE}) constructed according to the value of highest 20 bits of the UMTS branch counter value (a UMTS branch Start value) and the network-side random number (NONCE_{MME}) constructed according to a fresh value (Fresh value) generated by the RNC, the RNC constructs a NONCE_{UE} according to the Start value of the UMTS branch, uses the Fresh value as a NONCE_{MME}, and generates the KeNB according to the NONCE_{UE} and NONCE_{MME} and the system key to the UMTS branch (CK, IK). The function relationship is expressed as KeNB = KDF (CK, IK, NONCE_{UE}, NONCE_{MME}).

According to the foregoing manners, specifically, the constructing a NONCE_{UE} according to the Start value of the UMTS branch may be implemented by using but is not limited to any of the following three manners:
(1) The RNC complements 12 zero-bits to the Start value of the UMTS branch to generate a NONCE_{UE}.
(2) The RNC and the UE maintain a 12-bit state change counter (Count-State). When the UE changes from Active to Idle state, the value of this counter is increased by 1. A 20-bit Start value and the 12-bit Count-State value are connected in parallel to form a NONCE_{UE}.
(3) The RNC generates a 12-bit random number, and connects the 20-bit Start value and the 12-bit random numerical value in parallel to form a NONCE_{UE}.

Specifically, in a case where the foregoing technical solution of obtaining an access stratum root key to the LTE branch is in use when the user end changes from idle state (Idle state) to active state (Active state), the methods may also include:
the RNC stores the counter value and generates a new access stratum root key to the LTE branch according to the system key to the UMTS branch (CK, IK) and the counter value when the key generation parameter is the COUNT value of the UMTS branch; or, the RNC complements 0s to the value of highest 20 bits of the UMTS branch counter value (Start value) to generate a 32-bit counter value, and generates a new access stratum root key to the LTE branch according to the system key to the UMTS branch (CK, IK) and the counter value; or, the RNC generates a new access stratum root key to the LTE branch after generating a counter value by connecting the value of highest 20 bits of the UMTS branch counter value sent by the user end and a stored state change counter.

Specially, the stored UMTS branch counter value is a UMTS branch counter value when the user end state changes from active state to idle state; the state change counter value is the times the user end state changes from idle to active, and the value of the state change counter is increased by 1 for each time when the user end state changes from idle to active;
or,
when the key generation parameter is the random numerical value generated by the RNC, the RNC generates a new random numerical value, and generates a new access stratum root key according to the new random numerical value and the system key to the UMTS branch;
or,
when the key generation parameter is the user-side random number constructed according to the value of highest 20 bits of the UMTS branch counter value and the network-side random number constructed according to the fresh value generated by the RNC, the RNC constructs a new user-side random number by using the value of highest 20 bits of the UMTS branch counter value sent by the user end, uses the fresh value as a new network-side random number, and generates a new access stratum root key to the LTE branch in combination of the system key to the UMTS branch.

It should be noted that, after the RNC generates the new access stratum root key to the LTE branch, the base station on the LTE branch is enabled to generate a new access stratum key to the LTE branch according to a new access stratum root key to the LTE branch and the access stratum algorithm obtained before.

In the preceding manner, the method for constructing a NONCE_{UE} according to the Start value of the UMTS branch may be implemented by using the method for constructing a NONCE_{UE} according to the Start value of the UMTS branch provided in the embodiment shown in FIG. 2.

Optionally, the obtaining an access stratum root key to the LTE branch in step 401 may also be implemented by using the following manner: obtaining, by the RNC, the access stratum root key to the LTE branch from a server. The access stratum root key to the LTE branch is generated by the server according to the system key to the UMTS branch (CK, IK) and a non-access stratum counter value of the UMTS branch (NAS COUNT value of the UMTS branch), or the server generates a KeNB according to the NAS COUNT value of the UMTS branch and an access stratum root key to the LTE branch (Kasme) newly generated by the server according to the system key to the UMTS branch (CK, IK).

It should be noted that, the method for generating a Kasme provided in this embodiment is the same as the method for generating a Kasme provided in the embodiment shown in FIG. 2. The method for generating a KeNB according to the Kasme and the NAS COUNT value of the UMTS branch is the same as the method provided in the embodiment shown in FIG. 2. For details, reference may be made to the relevant description provided in the embodiment shown in FIG. 2.

Specifically, in a case where the foregoing technical solution of obtaining an access stratum root key to the LTE branch is in use, when the user end changes from IDEL state to Active state, the methods may also include:
instructing, by the RNC, the server to generate a new access stratum root key by using the non-access stratum counter value of the UMTS branch and the system key to the UMTS branch, so that the base station generates a new access stratum key to the LTE branch according to the new access stratum root key to the LTE branch and the access stratum algorithm.

Specifically, the obtaining an access stratum root key to the LTE branch in step 401 may also be implemented by using the following manner:
generating, by the RNC, the key generation parameter, where the key generation parameter is a random numerical value (Nonce value); and
generating, by the RNC, the access stratum root key to the LTE branch according to the random numerical value and a root key to an IP stratum security tunnel (K_{IPsec}) generated during an authentication with the base station on the LTE branch.

The method for generating an access stratum root key to the LTE branch according to the K_{IPsec} and the Nonce value is the same as the method shown in FIG. 2. For details, reference may be made to the relevant description provided in the embodiment shown in FIG. 2.

Specifically, when the foregoing manner for obtaining an access stratum root key to the LTE branch is in use, the method may also include:
sending the access stratum root key to the LTE branch under protection of a cipher key and an integrity key to the UMTS branch to the user end, so that the user end calculates the access stratum key to the LTE branch according to the access stratum root key.

Optionally, when the foregoing manner for obtaining an access stratum root key to the LTE branch is in use and the user end state changes from idle state to active state, the method may also include a change processing step, which includes:
generating, by the RNC, a new random number; and
generating a new access stratum root key according to the new random number and the root key to the IP stratum security tunnel, so that the base station generates a new access stratum key to the LTE branch according to the new access stratum root key to the LTE and the access stratum algorithm, to facilitate the base station to generate a new access stratum key to the LTE branch according to the new access stratum root key to the LTE and the access stratum algorithm.

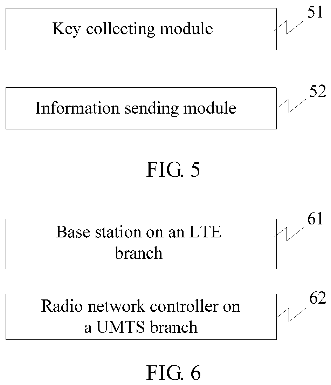

As shown in FIG. 5, an embodiment of the present invention provides an RNC on a UMTS branch based on the method embodiment provided in FIG. 4, which may include the following function modules:
a key collecting module 51, configured to obtain an access stratum root key to an LTE branch (KeNB); and
an information sending module 52, configured to send the access stratum root key to the LTE branch obtained by the key collecting module and user security capability to a base station on the LTE branch, or configured to send the user security capability and a key generation parameter used to generate the access stratum root key to the LTE branch to the base station, so that the base station generates an access stratum key to the LTE branch according to the access stratum root key and an access stratum algorithm determined according to the user security capability.

For the foregoing solution, specifically, the key collecting module 51 may be specifically configured to:
generate the access stratum root key to the LTE branch according to a system key to the UMTS branch and a key generation parameter, where the key generation parameter is: a UMTS branch counter value, or a random numerical value generated by the RNC, or a user-side random number constructed according to a value of highest 20 bits of the UMTS branch counter value and a network-side random number constructed according to a Fresh value generated by the RNC (It should be noted that, the generating, by the RNC, a KeNB according to the system key to the UMTS branch and the key generation parameter in the embodiment of the preset invention may be implemented in the same way as that used in the technical solution recorded in the embodiment provided in FIG. 2.);
   or,
obtain the access stratum root key to the LTE branch from a server, where, the access stratum root key to the LTE branch is generated by the server according to the system key to the UMTS branch and a non-access stratum counter value of the UMTS branch, or generated by the server, after generating a root key to the LTE branch according to the system key to the UMTS branch, according to the root key to the LTE branch and the non-access stratum counter value of the UMTS branch. (It should be noted that, the generating a KeNB by the RNC according to the system key to the UMTS branch and the key generation parameter in the embodiment of the present invention may be implemented in the same way as that used in the technical solution recorded in the embodiment provided in FIG. 2.)

For the foregoing solution, specifically, when the foregoing solution for generating a KeNB is in use and the user end state changes from idle state to active state, the key collecting module 51 may further be configured to:
store, when the key generation parameter is the UMTS branch counter value, the UMTS branch counter value and generate a new access stratum root key to the LTE branch according to the system key to the UMTS branch and the counter value; or, complement 0s to the value of highest 20 bits of the UMTS branch counter value to generate a 32-bit counter value, and generate a new access stratum root key to the LTE branch according to the system key to the UMTS branch and the counter value; or, generate a new access stratum root key to the LTE branch after generating a counter value by connecting the value of highest 20 bits of the UMTS branch counter value sent by the user end and a stored state change counter;
   or,
generate, when the key generation parameter is the random numerical value generated by the RNC, a new random numerical value, and generate a new access stratum root key to the LTE branch by using the new random numerical value and the system key to the UMTS branch;
   or,
construct, when the key generation parameter is the user-side random number constructed according to the value of highest 20 bits of the UMTS branch counter value and the network-side random number constructed according to the Fresh value generated by the RNC, a new user-side random number by using the value of highest 20 bits of the UMTS branch counter value sent by the user end, use the fresh value as a new network-side random number, and generate a new access stratum root key to the LTE branch in combination of the system key to the UMTS branch.

It should be noted that, after the RNC generates the new access stratum root key to the LTE branch, the base station can generate a new access stratum key to the LTE branch according to the new access stratum root key to the LTE branch and the access stratum algorithm.

For the foregoing solution, specifically, when the foregoing solution for generating a KeNB is in use and the user end state changes from idle state to active state, the key collecting module 51 may further be configured to:
instruct, when obtaining the access stratum root key to the LTE branch from a server, the server to generate a new access stratum root key to the LTE branch by using the non-access stratum UMTS branch counter value and the system key to the UMTS branch, so that the base station on the LTE branch generates a new access stratum key to the LTE branch according to the new access stratum root key to the LTE branch and the access stratum algorithm.

For the foregoing solution, specifically, the key collecting module 51 may further be configured to:
generate the key generation parameter, where the key generation parameter is a random numerical value; and
generate the access stratum root key to the LTE branch according to the random numerical value and a root key to an IP stratum security tunnel generated during an authentication with the base station on the LTE branch.

Furthermore, the information sending module 52 may further be configured to:
send the access stratum root key to the LTE branch obtained by the key collecting module and under protection of a cipher key and an integrity key to the UMTS branch to the user end, so that the user end calculates the access stratum key to the LTE branch according to the access stratum root key.

Furthermore, when the user end state changes from idle state to active state, the key collecting module 51 may further be configured to:
generate a new access stratum root key to the LTE branch according to a newly generated random number and the root key to the IP stratum security tunnel, so that the base station generates a new access stratum key to the LTE branch according to the new access stratum root key to the LTE branch and the access stratum algorithm.

It should be noted that, the embodiment of the present invention is an apparatus embodiment obtained based on the method shown in FIG. 4, and includes a same or similar technical feature as that of the method embodiment provided in FIG. 4. Therefore, the common technical feature is not described in detail in this embodiment, and reference may be made to the relevant description provided in the method embodiment shown in FIG. 4.

As shown in FIG. 6, an embodiment of the present invention provides a system for generating a key to an LTE branch, including:
a base station 61 on the LTE branch provided in the embodiment shown in FIG. 3, configured to obtain an access stratum root key to the LTE branch and user security capability, and generate an access stratum key to the LTE branch according to the access stratum root key to the LTE branch and an access stratum algorithm determined according to the user security capability; and
an RNC 62 on a UMTS branch provided in the embodiment shown in FIG. 5, configured to obtain the access stratum root key to the LTE branch; send the access stratum root key to the LTE branch and the user security capability to a base station on the LTE branch, or send the user security capability and a key generation parameter used to generate the access stratum root key to the LTE branch to the base station, so that the base station generates an access stratum key to the LTE branch according to the access stratum root key to the LTE branch and the access stratum algorithm determined according to the user security capability.

It should be noted that, the base station provided in the embodiment shown in FIG. 3 and the method provided in the embodiment shown in FIG. 5 may be used together to implement the technical solutions provided in the present invention.

For better understanding of the technical solution provided in the foregoing embodiment, the following describes a flow of generating an access stratum root key to the LTE branch in detail. A Single QoS scenario where a U&L Boosting network architecture that uses an RNC as an anchor point is taken as an example, and five specific embodiments are used for description. In the Single QoS scenario, data of the LTE branch and data of a UMTS branch are converged to a PDCP stratum. In the following embodiments, an eNB is a base station in an LTE system provided in the embodiment shown in FIG. 3 and an RNC is an RNC provided in the embodiment shown in FIG. 5.

### Embodiment 1

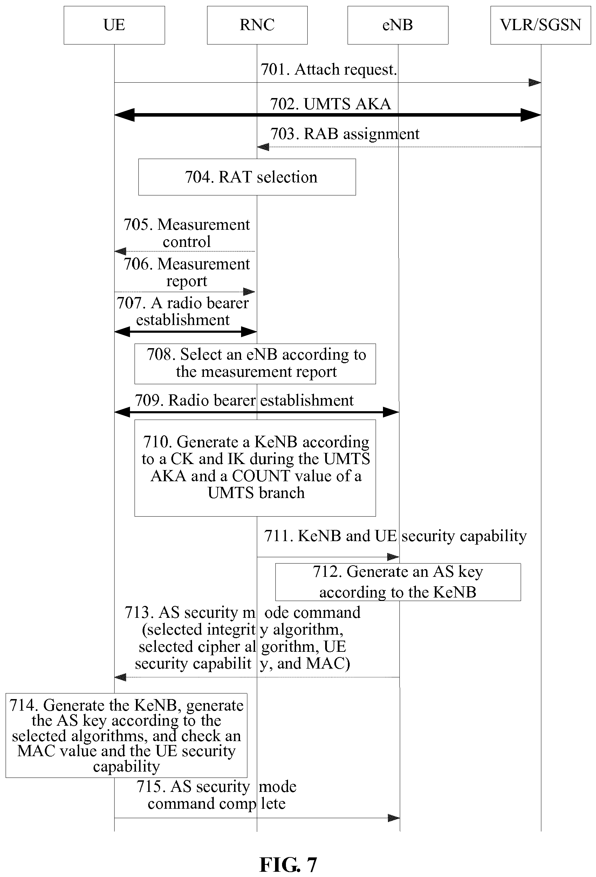

A derivation and update mechanism of a key to the UMTS branch is the same as the current mechanism. In this embodiment, a system key to the UMTS branch (CK, IK) and a COUNT value of the UMTS branch are used to generate a key to the LTE branch. As shown in FIG. 7, the specific flow is as follows:
Step 701: A UE sends an attach request to the UMTS branch VLR/SGSN, requesting to connect to a UMTS network.
Step 702: The UE and the VLR/SGSN perform a UMTS AKA (Authentication and Key Agreement) to complete a bi-directional authentication between the UE and the UMTS network, and generate a key to the UMTS branch (a cipher key CK and an integrity key IK).
Step 703: The VLR/SGSN assigns an RAB (Radio Access Bearer, radio access bearer) to the RNC after the authentication is successful.
Step 704: The RNC selects whether two RATs (Radio Access Technology, radio access technology) of the LTE branch and the UMTS branch are required.
Step 705: If a selecting result of the RNC in step 704 is that the two RATs are required, the RNC sends a measurement control message to the UE.
Step 706: The UE measures the status of neighboring eNBs, and sends a measurement result to the RNC.
Step 707: Establish a radio bearer between the UE and the RNC.
Step 708: The RNC selects an appropriate eNB (a base station on an LTE access network) according to the measurement result of the UE.
Step 709: Establish the radio bearer between the UE and the RNC.
Step 710: In Embodiment 1, the RNC generates a KeNB (an access stratum root key to the LTE branch) according to a key CK and IK generated during the UMTS AKA and a COUNT value of the UMTS branch. In this embodiment, the KeNB is generated by calculating a KDF function: the CK and IK and the COUNT value of the UMTS branch are used as entered parameters. The function relationship is expressed as KeNB = KDF (CK, IK, COUNT); and
it should be noted that, for details about the COUNT value of the UMTS branch, reference may be made to the relevant description provided in the embodiment shown in FIG. 2.
Step 711: The RNC sends the generated KeNB and the UE security capability to the eNB.
Step 712: The eNB selects a corresponding integrity algorithm and cipher algorithm according to the UE security capability, and derives in combination of the KeNB, an AS (Access Stratum, access stratum) key by using the current derivation method and the KeNB.
Step 713: The eNB sends an AS security mode command under integrity protection of an AS key to the UE, where the command includes the selected integrity algorithm and cipher algorithm and the UE security capability.
Step 714: The UE uses the same manner as that used by the RNC, calculates the KeNB according to KeNB = KDF (CK, IK, COUNT), and derives the AS key by using the integrity algorithm and cipher algorithm carried in the AS security mode command, then, checks integrity of the AS security mode command and checks whether the UE security capabilities are consistent.
Step 715: The UE sends a security mode complete message to the eNB after the check is successful.

It should be noted that, in Embodiment 1, both the LTE branch and the UMTS branch are set with a separate SRB (Signaling radio bearer, signaling radio bearer). If only the SRB of the UMTS branch is available, the SMC (Security Mode Command, security mode command) is transferred by the RNC.

In Embodiment 1, processing of the key to the LTE branch by the eNB when the UE changes from IDEL state to Active state and the updating method for the key to the LTE branch by the eNB when a PDCP Count value of the LTE branch overflows may be respectively implemented by using the technical solution provided in the embodiment shown in FIG. 2. For details, reference may be made to the relevant description provided in the embodiment shown in FIG. 2.

### Embodiment 2

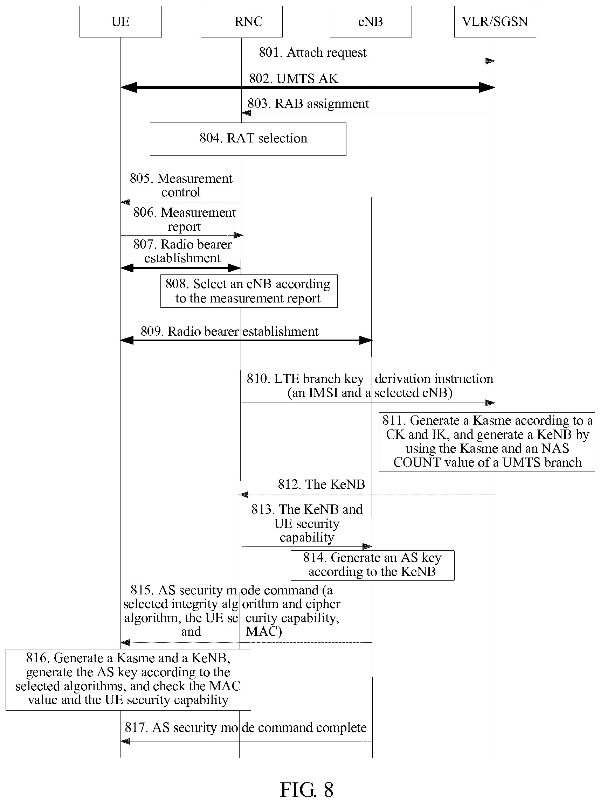

The derivation and update mechanism of a key to a UMTS branch is the same as the current mechanism. A system key to the UMTS branch (CK, IK) and a NAS COUNT value of the UMTS branch are used to generate a key to the LTE branch. As shown in FIG. 8, the specific flow is as follows.

Step 801 to step 809 in Embodiment 2 are the same as step 701 to step 709 in Embodiment 1. Therefore, this embodiment only describes the steps that are different from those in Embodiment 1.

Step 810: An RNC sends an LTE branch key derivation instruction to VLR/SGSN, where the instruction message carries an IMSI (International Mobile Subscriber Identification Number, international mobile subscriber identification) of a UE and an eNB selected by the RNC.

Step 811: The VLR/SGSN generates a root key to the LTE branch, Kasme, according to parameters such as a system key to the UMTS branch, CK and IK, generated during the UMTS AKA, and generates a KeNB according to the Kasme and an NAS COUNT value of the UMTS branch, where the function relationship is expressed as KeNB = KDF (Kasme, NAS COUNT); or,
the SGSN/MME directly generates the KeNB according to the CK and IK and the NAS COUNT value of the UMTS branch, where the function relationship is expressed as KeNB = KDF (CK, IK, NAS COUNT).

Step 812: The VLR/SGSN sends the generated KeNB to the RNC.

Step 813: The RNC transfers the KeNB and the UE security capability to the eNB.

Step 814: The eNB selects a corresponding integrity algorithm and cipher algorithm according to the UE security capability, and derives, in combination of the KeNB, an AS key according to the current derivation method.

Step 815: The eNB sends an AS security mode command under integrity protection of the AS key to the UE, where the command includes the selected integrity algorithm and cipher algorithm and the UE security capability.

Step 816: The UE uses the same manner as that used by the RNC, obtains the KeNB by using Kasme = KDF (CK, IK, PLMN ID) and KeNB = KDF (Kamse, NAS COUNT), or directly derives the KeNB by using KeNB = KDF (CK, IK, NAS COUNT), and derives the AS key according to the integrity algorithm and cipher algorithm carried in the AS security mode command, then, checks integrity of the AS security mode command and checks whether the UE security capabilities are consistent.

Step 817: The UE sends a security mode complete message to the eNB after the check is successful.

In Embodiment 2, processing of the key to the LTE branch by the eNB when the UE changes from IDEL to Active state and updating of the key to the LTE branch by the eNB when the PDCP Count value of the LTE branch overflows may be respectively implemented by using the technical solution provided in the embodiment shown in FIG. 2. For details, reference may be made to the relevant description provided in the embodiment shown in FIG. 2.

### Embodiment 3

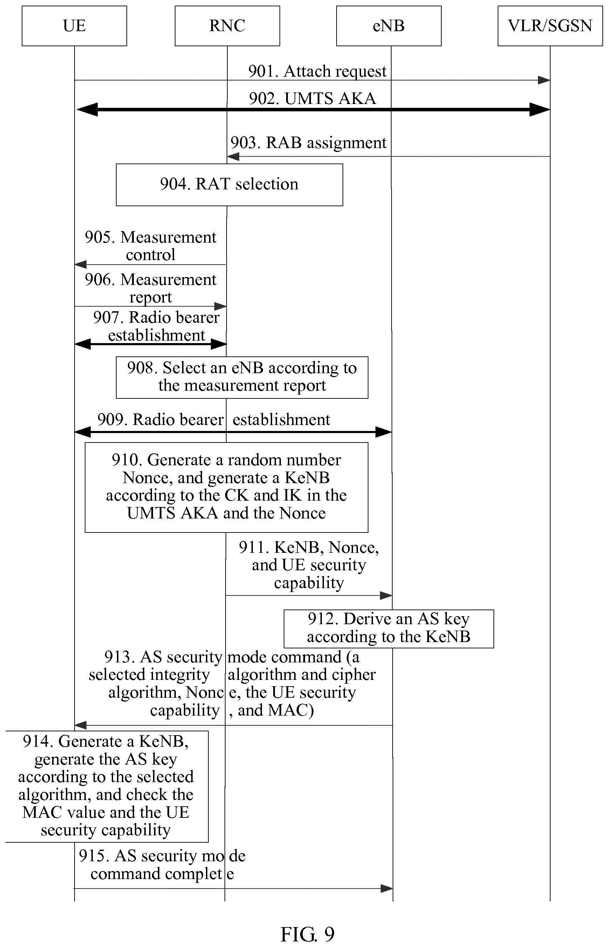

The derivation and update mechanism of a key to a UMTS branch is the same as the current mechanism. A system key to the UMTS branch (CK, IK) and a Nonce value generated by an RNC are used to derive a key to an LTE branch. As shown in FIG. 9, the specific flow is as follows.

Step 901 to step 909 in Embodiment 3 are the same as step 701 to step 709 in Embodiment 1. Therefore, this embodiment only describes the steps that are different from those in Embodiment 1;

Step 910: The RNC generates a random number Nonce, and generates a KeNB according to the key CK and IK generated during a UMTS AKA and the Nonce value, where the function relationship is expressed as KeNB = KDF (CK, IK, Nonce).

Step 911: The RNC sends the generated KeNB, the Nonce, and UE security capability to an eNB.

Step 912: The eNB selects a corresponding integrity algorithm and cipher algorithm according to the UE security capability, and derives, in combination of the KeNB, an AS key by using the current derivation method.

Step 913: The eNB sends an AS security mode command under integrity protection of the AS key to a UE, where the command includes the selected integrity algorithm and cipher algorithm, the Nonce, and the UE security capability.

Step 914: The UE uses the same manner as that used by the RNC, obtains the KeNB by calculating KeNB = KDF (CK, IK, Nonce), and derives the AS key according to the integrity algorithm and cipher algorithm carried in the AS security mode command, then, checks integrity of the AS security mode command and checks whether the UE security capabilities are consistent.

Step 915: The UE sends a security mode complete message to the eNB after the check is successful.

In embodiment 3, when the UE changes from IDEL to Active state, processing steps provided in the embodiment shown in FIG. 2 are used to process the KeNB that is in use currently.

### Embodiment 4

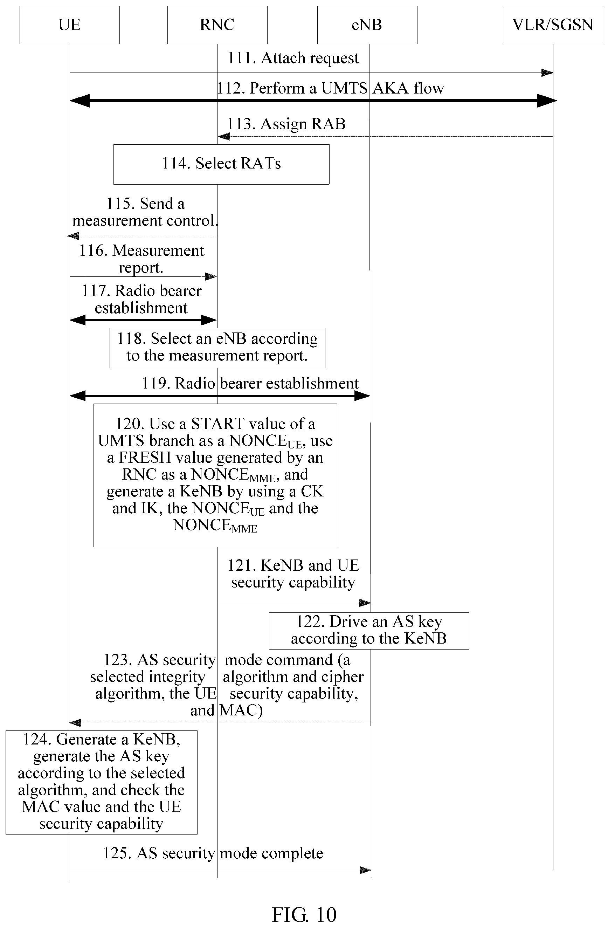

The derivation and update mechanism of a key to a UMTS branch is the same as the current mechanism. A NONCE_{UE} constructed according to a system key to the UMTS branch (CK, IK) and a Start value of the UMTS branch and a NONCE_{MME} constructed according to a fresh value generated by an RNC are used to derive a key to the LTE branch. As shown in FIG. 10, the specific flow is as follows.

Step 111 to step 119 in Embodiment 4 are the same as step 701 to step 709 in Embodiment 1. Therefore, this embodiment only describes the steps that are different from those in Embodiment 1.

Step 120: The RNC uses the Start value of the UMTS branch to construct the NONCE_{UE}, uses the Fresh value generated by the RNC as the NONCE_{MME}, and generates a KeNB according to a CK and IK generated during a UMTS AKA, the NONCE_{UE} and the NONCE_{MME}, where the function relationship is expressed as KeNB = KDF (CK, IK, NONCE_{UE}, NONCE_{MME}).

Step 121: The RNC sends the generated KeNB and UE security capability to an eNB.

Step 122: The eNB selects a corresponding integrity algorithm and cipher algorithm according to the UE security capability, and derives, in combination with the KeNB, an AS key according to the current derivation method.

Step 123: The eNB sends an AS security mode command under integrity protection of the AS key to a UE, where the command includes the selected integrity algorithm and cipher algorithm and the UE security capability.

Step 124: The UE uses the same method as that used by the RNC, generates the KeNB by calculating the function KeNB = KDF (CK, IK, NONCE_{UE}, NONCE_{MME}), and derives the AS key according to the integrity algorithm and cipher algorithm carried in the AS security mode command, then, checks integrity of the AS security mode command and checks whether the UE security capabilities are consistent.

Step 125: The UE sends a security mode complete message to the eNB after the check is successful.

For the foregoing step 120, specifically, the constructing the NONCE_{UE} according to the Start value of the UMTS branch may be implemented by using the construction method provided in the embodiment shown in FIG. 2. For details, reference may be made to the embodiment shown in FIG. 2.

In Embodiment 4, processing of the key to the LTE branch by the eNB when the UE changes from IDEL to Active state and updating of the key to the LTE branch by the eNB when the PDCP

Count value of the LTE branch overflows may be respectively implemented by using the technical solution provided in the embodiment shown in FIG. 2. For details, reference may be made to the relevant description provided in the embodiment shown in FIG. 2.

### Embodiment 5

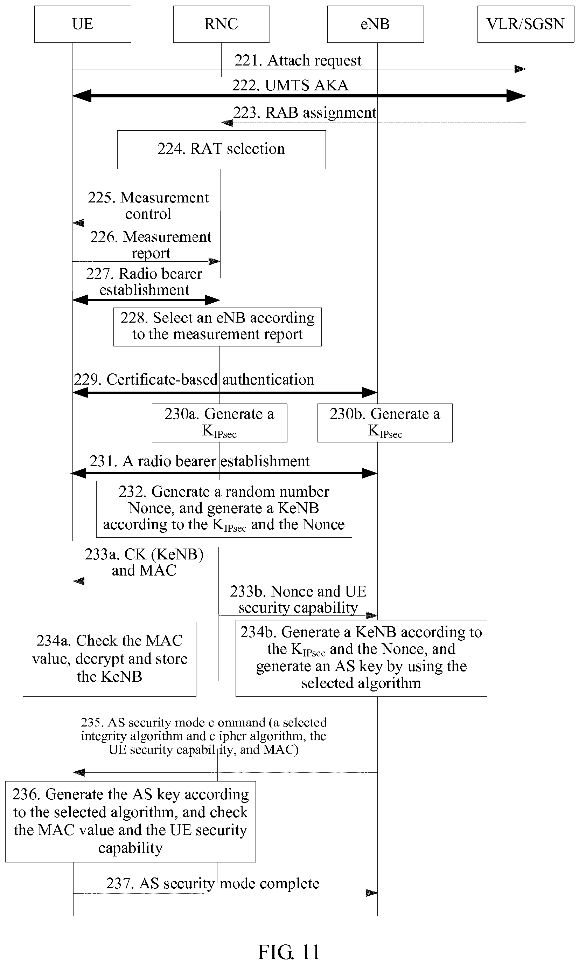

The derivation and update mechanism of a key to a UMTS branch is the same as the current mechanism. A K_{IPsec} generated by an RNC and an eNB during a certificate-based authentication and a random number Nonce are used to generate a KeNB. As shown in FIG. 11, the specific flow is as follows.

Step 221 to step 228 in Embodiment 5 are the same as step 701 to step 708 in Embodiment 1. Therefore, this embodiment only describes the steps that are different from those in Embodiment 1.

Step 229: The RNC and the eNB perform the certificate-based authentication with each other.

Step 230: The RNC and the eNB establish an IPsec tunnel based on the certificate authentication and generate a key K_{IPsec}.

Step 231: Establish a radio bearer between a UE and the eNB.

Step 232: The RNC generates a random number Nonce, and generates a KeNB according to the K_{IPsec} generated during the certificate-based authentication and a Nonce, where the function relationship is expressed as KeNB = KDF (K_{IPsec}, Nonce).

Step 233: The RNC sends the KeNB to the UE after performing integrity and cipher protection on the KeNB by using a security parameter of the UMTS branch, and sends a generated Nonce value and UE security capability to the eNB.

Step 234: The UE checks an MAC value by using a key to the UMTS branch, decrypts and stores the KeNB; and
the eNB uses the same manner as that used by the RNC, generates the KeNB according to the K_{IPsec} generated during the certificate-based authentication and the Nonce, where the function relationship is expressed as KeNB = KDF (K_{IPsec}, Nonce), selects an integrity algorithm and a cipher algorithm according to the UE security capability, and generates the AS key by using the current derivation method.

Step 235: The eNB sends an AS security mode command under integrity protection of the AS key to the UE, where the command includes the selected integrity algorithm and cipher algorithm and the UE security capability.

Step 236: The UE derives the AS key by using a pre-stored KeNB and the integrity algorithm and cipher algorithm carried in the AS security mode command, then, checks integrity of the AS security mode command and checks whether the UE security capabilities are consistent.

Step 237: The UE sends a security mode complete message to the eNB after the check is successful.

In embodiment 5, when the UE changes from IDEL to Active state, a change processing steps provided in the embodiment shown in FIG. 2 may be used to process the KeNB that is in use currently, and the RNC derives a new KeNB according to a new NONCE.

Specifically, for Embodiment 5, processing of the key to the LTE branch by the eNB when the UE changes from IDEL state to Active state and updating of the key to the LTE branch by the eNB when the PDCP Count value of the LTE branch overflows may be respectively implemented by using the technical solution provided in the embodiment shown in FIG. 2. For details, reference may be made to the relevant description provided in the embodiment shown in FIG. 2.

Based on the descriptions, Embodiment 1 to Embodiment 5 take a Single QoS scenario where a U&L Boosting network architecture that uses an RNC as an anchor point as an example to describe the technical solutions provided in the embodiments of the present invention in detail. The technical solutions are applicable to three application scenarios of the U&L Boosting network architecture that use the RNC as the anchor point, which are Single QoS, Single PDCP, and Single RLC. When the technical solutions provided in the embodiments of the present invention are used in a Single PDCP scenario, data of an LTE branch and data of a UMTS branch are converged at a PDCP stratum of the RNC, and a PDCP stratum of the RNC on the UMTS branch needs to add a function of encrypting the data of the LTE branch. It should be noted that, a method for generating a key to the LTE branch according to a key to the UMTS branch in Scenario 1, the Single QoS scenario, may still be used, but a generated key to the LTE branch is used by the PDCP stratum of the RNC instead of being sent to an eNB.

When the technical solutions provided in the embodiments of the present invention are used in a Single RLC scenario, data of an LTE branch and data of a UMTS branch are converged at an RLC stratum of the RNC. If the UMTS branch uses a TM mode, that is, the data is encrypted at an MAC stratum, the RLC stratum of the UMTS branch needs to add a function of encrypting the data of the LTE branch. The method for deriving a key to the LTE branch according to the UMTS branch is the same as that is used in Scenario 1, the Single QoS scenario, but the generated key to the LTE branch is used by the RLC stratum of the RNC instead of being sent to the eNB.

Based on the descriptions, by using a method, an apparatus, and a system for generating a key to an LTE branch that are applicable to an LTE-UMTS resource convergence scenario and provided in the embodiments of the present invention, security protection can be performed on data of a UE on the LTE branch by using a generated access stratum key to the LTE branch when the UE communicates through the LTE branch, which avoids interception on the data of the UE by an attacker due to unavailability of a key to the LTE branch, and improves communication security while ensuring normal communication of the UE through the LTE branch.

Persons of ordinary skill in the art may understand that all or a part of the processes of the methods in the embodiments may be implemented by a computer program instructing relevant hardware. The program may be stored in a computer readable storage medium. When the program is run, the processes of the methods in the embodiments are performed. The storage medium includes a magnetic disk, an optical disk, a ready-only memory (Ready-Only Memory, ROM) or a random access memory (Random Access Memory, RAM), and the like.

The descriptions are merely exemplary and specific embodiments of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A method for generating a key to a long term evolution, LTE, branch, which is applicable to an LTE-universal mobile telecommunications system, UMTS, resource convergence scenario, the method comprising:
obtaining (201), by a base station on an LTE branch, an access stratum root key to the LTE branch and user end, UE, security capability;
generating (202), according to the access stratum root key and an access stratum algorithm determined according to the UE security capability, an access stratum key to the LTE branch; and
generating, by the base station, when a packet data convergence protocol stratum counter value of the LTE branch overflows, according to the access stratum root key to the LTE branch, a physical cell identity, and a downlink frequency number that are currently in use, a new access stratum root key to the LTE branch, so that the base station, according to the new access stratum root key to the LTE branch and the access stratum algorithm, generates a new access stratum key to the LTE branch.

2. The method according to claim 1, wherein the obtaining an access stratum root key to the LTE branch, comprises:
obtaining, from a radio network controller RNC on a universal mobile telecommunications system UMTS branch, the access stratum root key to the LTE branch; wherein,
the access stratum root key to the LTE branch is generated by the RNC according to a system key to the UMTS branch and a key generation parameter; the key generation parameter is: a UMTS branch counter value, or a random numerical value generated by the RNC, or a user-side random number constructed according to a value of highest 20 bits of the UMTS branch counter value and a network-side random number constructed according to a fresh value generated by the RNC;
or,
the access stratum root key to the LTE branch is obtained by the RNC from a server; wherein, the access stratum root key to the LTE branch is generated by the server according to the system key to the UMTS branch and a non-access stratum counter value of the UMTS branch, or generated by the server, after generating a root key to the LTE branch according to the system key to the UMTS branch, according to the root key to the LTE branch and the non-access stratum counter value of the UMTS branch.

3. The method according to claim 1, wherein the obtaining an access stratum root key to the LTE branch, comprises:
obtaining, by the base station on the LTE branch, a key generation parameter from an RNC on the UMTS branch; wherein, the key generation parameter is a random numerical value generated by the RNC; and
generating, according to the random numerical value and a root key to an IP stratum security tunnel generated during an authentication with the RNC, the access stratum root key to the LTE branch.

4. The method according to any one of claims 1 to 3, further comprising:
sending, after generating the access stratum key to the LTE branch, an access stratum security mode command under protection of the access stratum key to a UE, so that the UE generates the access stratum key to the LTE branch; wherein, the access stratum security mode command at least comprises the UE security capability and the determined access stratum algorithm.

5. A base station that is applicable to an LTE-UMTS resource convergence scenario, comprising:
an information obtaining module (31), configured to obtain an access stratum root key to an LTE branch and UE security capability;
a key generation module (32), configured to generate, according to the access stratum root key obtained by the information obtaining module and an access stratum algorithm determined according to the UE security capability, an access stratum key to the LTE branch; and
a key updating module (34), configured to generate, when a packet data convergence protocol stratum counter value of the LTE branch overflows, according to the access stratum root key to the LTE branch, a physical cell identity, and a downlink frequency number that are currently in use, a new access stratum root key to the LTE branch, so that the key generation module generates, according to the new access stratum root key to the LTE branch and the access stratum algorithm, a new access stratum key to the LTE branch.

6. The base station according to claim 5, wherein the information obtaining module is specifically configured to:
obtain the access stratum root key to the LTE branch from an RNC on a UMTS branch; wherein,
the access stratum root key to the LTE branch is generated by the RNC according to a system key to the UMTS branch and a key generation parameter; the key generation parameter is: a UMTS branch counter value, or a random numerical value generated by the RNC, or a user-side random number constructed according to a value of highest 20 bits of the UMTS branch counter value and a network-side random number constructed according to a fresh value generated by the RNC; or,
the access stratum root key to the LTE branch is obtained by the RNC from a server; wherein, the access stratum root key to the LTE branch is generated by the server according to the system key to the UMTS branch and a non-access stratum counter value of the UMTS branch, or generated by the server, after generating a root key to the LTE branch according to the system key to the UMTS branch, according to the root key to the LTE branch and the non-access stratum counter value of the UMTS branch.

7. The base station according to claim 5, wherein the information obtaining module is specifically configured to:
obtain the key generation parameter from the RNC on the UMTS branch; wherein, the key generation parameter is a random numerical value generated by the RNC; and
generate, according to the random numerical value and a root key to an IP stratum security tunnel generated during an authentication with the RNC, the access stratum root key to the LTE branch.

8. The base station according to any one of claims 5 to 7, further comprising:
a command sending module (33), configured to send, after the key generation module generates the access stratum key to the LTE branch, an access stratum security mode command under protection of the access stratum key to a UE, so that the UE generates the access stratum key to the LTE branch; wherein, the access stratum security mode command at least comprises the UE security capability and the determined access stratum algorithm.

## Patentansprüche

1. Verfahren zur Erzeugung eines Schlüssels zu einem "Long Term Evolution"-Zweig bzw. LTE-Zweig, der bei einem LTE-"Universal Mobile Telecommunications System"-Ressourcenkonvergenzszenario bzw. LTE-UMTS-Ressourcenkonvergenzszenario anwendbar ist, wobei das Verfahren Folgendes umfasst:
Erhalten (201), durch eine Basisstation auf einem LTE-Zweig, eines "Access"-Stratum-Root-Schlüssels zum LTE-Zweig und einer Benutzerende-Sicherheitsfähigkeit bzw. UE-Sicherheitsfähigkeit;
Erzeugen (202), gemäß dem "Access"-Stratum-Root-Schlüssel und einem "Access"-Stratum-Algorithmus, der gemäß der UE-Sicherheitsfähigkeit bestimmt wird, eines "Access"-Stratum-Schlüssels zum LTE-Zweig; und
Erzeugen, durch die Basisstation, wenn ein Paketdaten-Konvergenzprotokoll-Stratumzählerwert des LTE-Zweigs überläuft, gemäß dem "Access"-Stratum-Root-Schlüssel zum LTE-Zweig, einer physischen Zellidentität und einer Abwärtsstreckenfrequenznummer, die gegenwärtig in Gebrauch sind, eines neuen "Access"-Stratum-Root-Schlüssels zum LTE-Zweig, so dass die Basisstation einen neuen "Access"-Stratum-Schlüssel zum LTE-Zweig gemäß dem neuen "Access"-Stratum-Root-Schlüssel zum LTE-Zweig und dem "Access"-Stratum-Algorithmus erzeugt.

2. Verfahren nach Anspruch 1, wobei das Erhalten eines "Access"-Stratum-Root-Schlüssels zum LTE-Zweig Folgendes umfasst:
Erhalten, von einer Funknetzsteuerung RNC auf einem "Universal Mobile Telecommunications System"-Zweig bzw. UMTS-Zweig, des "Access"-Stratum-Root-Schlüssels zum LTE-Zweig; wobei
der "Access"-Stratum-Root-Schlüssel zum LTE-Zweig durch die RNC gemäß einem Systemschlüssel zum UMTS-Zweig und einem Schlüsselerzeugungsparameter erzeugt wird; der Schlüsselerzeugungsparameter ein UMTS-Zweig-Zählerwert oder ein zufälliger numerischer Wert, der durch die RNC erzeugt wird, oder eine benutzerseitige zufällige Zahl, die gemäß einem Wert der 20 höchsten Bits des UMTS-Zweig-Zählerwerts gebildet wird, und eine netzseitige zufällige Zahl, die gemäß einem durch die RNC erzeugten neuen Wert gebildet wird, ist;
oder
der "Access"-Stratum-Root-Schlüssel zum LTE-Zweig durch die RNC von einem Server erhalten wird;
wobei der "Access"-Stratum-Root-Schlüssel zum LTE-Zweig durch den Server gemäß dem Systemschlüssel zum UMTS-Zweig und einem "Non-Access"-StratumZählerwert des UMTS-Zweigs erzeugt wird, oder durch den Server, nach dem Erzeugen eines Root-Schlüssels zum LTE-Zweig gemäß dem Systemschlüssel zum UMTS-Zweig, gemäß dem Root-Schlüssel zum LTE-Zweig und dem "Non-Access"-Stratum-Zählerwert des UMTS-Zweigs erzeugt wird.

3. Verfahren nach Anspruch 1, wobei das Erhalten eines "Access"-Stratum-Root-Schlüssels zum LTE-Zweig Folgendes umfasst:
Erhalten, durch die Basisstation auf dem LTE-Zweig, eines Schlüsselerzeugungsparameters von einer RNC auf dem UMTS-Zweig; wobei der Schlüsselerzeugungsparameter ein zufälliger numerischer Wert ist, der durch die RNC erzeugt wird; und
Erzeugen, gemäß dem zufälligen numerischen Wert und einem Root-Schlüssel zu einem IP-Stratum-Sicherheitstunnel, der während einer Authentifikation mit der RNC erzeugt wird, des "Access"-Stratum-Root-Schlüssels zum LTE-Zweig.

4. Verfahren nach einem der Ansprüche 1 bis 3, ferner umfassend:
Senden, nach dem Erzeugen des "Access"-Stratum-Schlüssels zum LTE-Zweig, eines "Access"-Stratum-Sicherheitsmodusbefehls unter dem Schutz des "Access"-Stratum-Schlüssels zu einem UE, so dass das UE den "Access"-Stratum-Schlüssel zum LTE-Zweig erzeugt; wobei der "Access"-Stratum-Sicherheitsmodusbefehl mindestens die UE-Sicherheitsfähigkeit und den bestimmten "Access"-Stratum-Algorithmus umfasst.

5. Basisstation, die bei einem LTE-UMTS-Ressourcenkonvergenzszenario anwendbar ist, umfassend:
ein Informationserhaltmodul (31), das dazu konfiguriert ist, einen "Access"-Stratum-Root-Schlüssel zu einem LTE-Zweig und eine UE-Sicherheitsfähigkeit zu erhalten; ein Schlüsselerzeugungsmodul (32), das dazu konfiguriert ist, einen "Access"-Stratum-Schlüssel zum LTE-Zweig gemäß dem "Access"-Stratum-Root-Schlüssel, der durch das Informationserhaltmodul erhalten wird, und einem "Access"-Stratum-Algorithmus, der gemäß der UE-Sicherheitsfähigkeit bestimmt wird, zu erzeugen; und
ein Schlüsselaktualisierungsmodul (34), das dazu konfiguriert ist, wenn ein Paketdaten-Konvergenzprotokoll-Stratumzählerwert des LTE-Zweigs überläuft, einen neuen "Access"-Stratum-Root-Schlüssel zum LTE-Zweig gemäß dem "Access"-Stratum-Root-Schlüssel zum LTE-Zweig, einer physischen Zellidentität und einer Abwärtsstreckenfrequenznummer, die gegenwärtig in Gebrauch sind, zu erzeugen, so dass das Schlüsselerzeugungsmodul einen neuen "Access"-Stratum-Schlüssel zum LTE-Zweig gemäß dem neuen "Access"-Stratum-Root-Schlüssel zum LTE-Zweig und dem "Access"-Stratum-Algorithmus erzeugt.

6. Basisstation nach Anspruch 5, wobei das Informationserhaltmodul spezifisch dazu konfiguriert ist,
den "Access"-Stratum-Root-Schlüssel zum LTE-Zweig von einer RNC auf einem UMTS-Zweig zu erhalten; wobei
der "Access"-Stratum-Root-Schlüssel zum LTE-Zweig durch die RNC gemäß einem Systemschlüssel zum UMTS-Zweig und einem Schlüsselerzeugungsparameter erzeugt wird; der Schlüsselerzeugungsparameter ein UMTS-Zweig-Zählerwert oder ein zufälliger numerischer Wert, der durch die RNC erzeugt wird, oder eine benutzerseitige zufällige Zahl, die gemäß einem Wert der 20 höchsten Bits des UMTS-Zweig-Zählerwerts gebildet wird, und eine netzseitige zufällige Zahl, die gemäß einem durch die RNC erzeugten neuen Wert gebildet wird, ist; oder
der "Access"-Stratum-Root-Schlüssel zum LTE-Zweig durch die RNC von einem Server erhalten wird;
wobei der "Access"-Stratum-Root-Schlüssel zum LTE-Zweig durch den Server gemäß dem Systemschlüssel zum UMTS-Zweig und einem "Non-Access"-StratumZählerwert des UMTS-Zweigs erzeugt wird, oder durch den Server, nach dem Erzeugen eines Root-Schlüssels zum LTE-Zweig gemäß dem Systemschlüssel zum UMTS-Zweig, gemäß dem Root-Schlüssel zum LTE-Zweig und dem "Non-Access"-Stratum-Zählerwert des UMTS-Zweigs erzeugt wird.

7. Basisstation nach Anspruch 5, wobei das Informationserhaltmodul spezifisch dazu konfiguriert ist,
den Schlüsselerzeugungsparameter von der RNC auf dem UMTS-Zweig zu erhalten; wobei der Schlüsselerzeugungsparameter ein zufälliger numerischer Wert ist, der durch die RNC erzeugt wird; und
den "Access"-Stratum-Root-Schlüssel zum LTE-Zweig gemäß dem zufälligen numerischen Wert und einem Root-Schlüssel zu einem IP-Stratum-Sicherheitsstunnel, der während einer Authentifikation mit der RNC erzeugt wird, zu erzeugen.

8. Basisstation nach einem der Ansprüche 5 bis 7, ferner umfassend:
ein Befehlssendemodul (33), das dazu konfiguriert ist, nachdem das Schlüsselerzeugungsmodul den "Access"-Stratum-Schlüssel zum LTE-Zweig erzeugt, einen "Access"-Stratum-Sicherheitsmodusbefehl unter dem Schutz des "Access"-Stratum-Schlüssels zu einem UE zu senden, so dass das UE den "Access"-Stratum-Schlüssel zum LTE-Zweig erzeugt; wobei der "Access"-Stratum-Sicherheitsmodusbefehl mindestens die UE-Sicherheitsfähigkeit und den bestimmten "Access"-Stratum-Algorithmus umfasst.

## Revendications

1. Procédé pour générer une clé à une branche d'évolution à long terme (LTE) qui est applicable à un scénario de convergence de ressources de système de télécommunication mobile universel (UMTS) à technologie LTE, le procédé consistant à :
obtenir (201), au moyen d'une station de base sur une branche LTE, une clé racine de strate d'accès pour la branche LTE et une capacité de sécurité d'extrémité utilisateur (UE) ;
générer (202), en fonction de la clé racine de strate d'accès et d'un algorithme de strate d'accès déterminé en fonction de la capacité de sécurité d'UE, une clé de strate d'accès pour la branche LTE ; et
générer, au moyen de la station de base, lorsqu'une valeur de compteur de strate de protocole de convergence de données par paquets de la branche LTE déborde, en fonction de la clé racine de strate d'accès pour la branche LTE, une identité de cellule physique et un nombre de fréquences de liaison descendante qui sont à présent utilisées, une nouvelle clé racine de strate d'accès pour la branche LTE de telle sorte que la station de base, en fonction de la nouvelle clé racine de strate d'accès pour la branche LTE et de l'algorithme de strate d'accès, génère une nouvelle clé de strate d'accès pour la branche LTE.

2. Procédé selon la revendication 1, dans lequel l'obtention d'une clé racine de strate d'accès pour la branche LTE consiste à :
obtenir, d'un dispositif de commande de réseau de radiocommunication (RNC) sur une branche du système de télécommunication mobile universel (UMTS), la clé racine de strate d'accès pour la branche LTE ; dans lequel
la clé racine de strate d'accès pour la branche LTE est générée par le dispositif de commande RNC en fonction d'une clé du système pour la branche LTE et d'un paramètre de génération de clé ; le paramètre de génération de clé est : une valeur de compteur de branche du système UMTS ou une valeur numérique aléatoire générée par le dispositif de commande RNC ou un nombre aléatoire côté utilisateur construit en fonction d'une valeur des 20 bits les plus élevés de la valeur de compteur de branche du système UMTS et d'un nombre aléatoire côté réseau construit en fonction d'une nouvelle valeur générée par le dispositif de commande RNC ;
ou
la clé racine de strate d'accès pour la branche LTE est obtenue d'un serveur par le dispositif de commande RNC ; dans lequel la clé racine de strate d'accès pour la branche LTE est générée par le serveur en fonction de la clé du système pour la branche du système UMTS et d'une valeur de compteur de strate de non-accès de la branche du système UMTS ou générée par le serveur après la génération d'une clé racine pour la branche LTE en fonction de la clé du système pour la branche du système UMTS, en fonction de la clé racine pour la branche LTE et de la valeur de compteur de strate de non-accès de la branche du système UMTS.

3. Procédé selon la revendication 1, dans lequel l'obtention d'une clé racine de strate d'accès pour la branche LTE consiste à :
obtenir, au moyen de la station de base sur la branche LTE, un paramètre de génération de clé d'un dispositif de commande RNC sur la branche du système UMTS ; dans lequel le paramètre de génération de clé est une valeur numérique aléatoire générée par le dispositif de commande RNC ; et
générer, en fonction de la valeur numérique aléatoire et d'une clé racine pour un tunnel de sécurité de strate IP générée pendant une authentification avec le dispositif de commande RNC, la clé racine de strate d'accès pour la branche LTE.

4. Procédé selon l'une quelconque des revendications 1 à 3, consistant en outre à :
envoyer, après la génération de la clé de strate d'accès pour la branche LTE, une commande de mode de sécurité de strate d'accès sous la protection de la clé de strate d'accès à un UE de telle sorte que l'UE génère la clé de strate d'accès pour la branche LTE ; dans lequel la commande de mode de sécurité de strate d'accès comprend au moins la capacité de sécurité d'UE et l'algorithme de strate d'accès déterminé.

5. Station de base qui peut être appliquée à un scénario de convergence de ressources de système UMTS à technologie LTE, comprenant :
un module d'obtention d'informations (31), configuré pour obtenir une clé racine de strate d'accès pour une branche LTE et une capacité de sécurité d'UE ;
un module de génération de clé (32), configuré pour générer, en fonction de la clé racine de strate d'accès obtenue par le module d'obtention d'informations et d'un algorithme de strate d'accès déterminé en fonction de la capacité de sécurité d'UE, une clé de strate d'accès pour la branche LTE ; et
un module de mise à jour de clé (34), configuré pour générer, lorsqu'une valeur de compteur de strate de protocole de convergence de données par paquets de la branche LTE déborde, en fonction de la clé racine de strate d'accès pour la branche LTE, une identité de cellule physique et un nombre de fréquences de liaison descendante qui sont à présent utilisées, une nouvelle clé racine de strate d'accès pour la branche LTE de telle sorte que le module de génération de clé génère, en fonction de la nouvelle clé racine de strate d'accès pour la branche LTE et de l'algorithme de strate d'accès, une nouvelle clé de strate d'accès pour la branche LTE.

6. Station de base selon la revendication 5, dans laquelle le module d'obtention d'informations est spécialement configuré pour :
obtenir la clé racine de strate d'accès pour la branche LTE d'un dispositif de commande RNC sur une branche du système UMTS ; dans laquelle la clé racine de strate d'accès pour la branche LTE est générée par le dispositif de commande RNC en fonction d'une clé du système pour la branche du système UMTS et d'un paramètre de génération de clé ; le paramètre de génération de clé est : une valeur de compteur de branche du système UMTS ou une valeur numérique aléatoire générée par le dispositif de commande RNC ou un nombre aléatoire côté utilisateur construit en fonction d'une valeur des 20 bits les plus élevés de la valeur de compteur de branche du système UMTS et d'un nombre aléatoire côté réseau construit en fonction d'une nouvelle valeur générée par le dispositif de commande RNC ; ou
la clé racine de strate d'accès pour la branche LTE est obtenue d'un serveur par le dispositif de commande RNC ; dans laquelle la clé racine de strate d'accès pour la branche LTE est générée par le serveur en fonction de la clé du système pour la branche du système UMTS et d'une valeur de compteur de strate de non-accès de la branche du système UMTS ou générée par le serveur après la génération d'une clé racine pour la branche LTE en fonction de la clé du système pour la branche du système UMTS, en fonction de la clé racine pour la branche LTE et de la valeur de compteur de strate de non-accès de la branche du système UMTS.

7. Station de base selon la revendication 5, dans laquelle le module d'obtention d'informations est spécialement configuré pour :
obtenir le paramètre de génération de clé du dispositif de commande RNC sur la branche du système UMTS ; dans laquelle le paramètre de génération de clé est une valeur numérique aléatoire générée par le dispositif de commande RNC ; et
générer, en fonction de la valeur numérique aléatoire et d'une clé racine pour un tunnel de sécurité de strate IP générée pendant une authentification avec le dispositif de commande RNC, la clé racine de strate d'accès pour la branche LTE.

8. Station de base selon l'une quelconque des revendications 5 à 7, comprenant en outre :
un module de commande d'envoi (33), configuré pour envoyer, après que le module de génération de clé génère la clé de strate d'accès pour la branche LTE, une commande de mode de sécurité de strate d'accès sous la protection de la clé de strate d'accès à un UE de telle sorte que l'UE génère la clé de strate d'accès pour la branche LTE ; dans laquelle la commande de mode de sécurité de strate d'accès comprend au moins la capacité de sécurité d'UE et l'algorithme de strate d'accès déterminé.
